(19) Europäisches Patentamt / European Patent Office / Office européen des brevets

(11) **EP 3 840 158 B1**

(12) **FASCICULE DE BREVET EUROPEEN**

(45) Date de publication et mention de la délivrance du brevet:
**25.01.2023 Bulletin 2023/04**

(21) Numéro de dépôt: **20211626.5**

(22) Date de dépôt: **03.12.2020**

(51) Classification Internationale des Brevets (IPC):
*H02J 1/14* *(2006.01)*    *H02J 7/35* *(2006.01)*
*H02J 1/08* *(2006.01)*

(52) Classification Coopérative des Brevets (CPC):
**H02J 1/14; H02J 7/35;** H02J 1/08; H02J 3/004;
H02J 3/008; H02J 7/00712; H02J 2300/26;
H02J 2310/12; H02J 2310/52; H02J 2310/60;
H02J 2310/62; Y02A 30/00; Y02E 10/56

(54) **PROCÉDÉ DE DÉLESTAGE DE SORTIES D'UNE INSTALLATION DE PRODUCTION D'ÉNERGIE ÉLECTRIQUE**

VERFAHREN ZUR ENTLASTUNG DER AUSGÄNGE EINER STROMERZEUGUNGSANLAGE

METHOD FOR LOAD-SHEDDING OF OUTPUTS FROM A FACILITY FOR PRODUCING ELECTRICAL ENERGY

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **20.12.2019 FR 1915111**

(43) Date de publication de la demande:
**23.06.2021 Bulletin 2021/25**

(73) Titulaire: **Sagemcom Energy & Telecom SAS**
**92500 Rueil-Malmaison (FR)**

(72) Inventeurs:
• **BOUKHARI, Kévin**
**92500 RUEIL MALMAISON (FR)**
• **TARDY-MARCANTONI, Romain**
**92500 RUEIL MALMAISON (FR)**

(74) Mandataire: **Decorchemont, Audrey Véronique Christèle et al**
**CABINET BOETTCHER**
**16, rue Médéric**
**75017 Paris (FR)**

(56) Documents cités:
EP-A1- 3 422 519    US-A1- 2011 276 269
US-A1- 2018 262 003    US-B2- 9 760 956

**Description**

L'invention concerne le domaine des installations de production d'énergie électrique à partir d'une énergie renouvelable, de type énergie solaire, et le contrôle du délestage de leurs différentes sorties.

ARRIERE PLAN DE L'INVENTION

Dans certains pays où le taux d'ensoleillement est important, il est connu d'utiliser des petites installations de production d'énergie électrique de manière unitaire, ou interconnectée, pour alimenter une ou plusieurs habitations rurales. Ces installations, parfois appelées « Solar Home Systems » (SHS) ou installations solaires domestiques, comprennent usuellement un ou plusieurs panneaux solaires et une ou plusieurs batteries pour stocker l'énergie électrique et alimenter les habitations lorsque l'ensoleillement est insuffisant. L'inconvénient des installations actuelles est que si la demande énergétique ne peut être satisfaite ni par les panneaux solaires ni par les batteries, les installations coupent directement de manière brutale l'alimentation de tous les équipements raccordés auxdites installations.

OBJET DE L'INVENTION

Un but de l'invention est de proposer un procédé de délestage intelligent de sorties d'au moins une installation de production d'énergie électrique.

RESUME DE L'INVENTION

En vue de la réalisation de ce but, on propose, selon l'invention un procédé de délestage contrôlé de sorties d'au moins une installation de production d'énergie électrique comprenant au moins une source d'énergie renouvelable et au moins une batterie, les sorties étant classées selon au moins deux niveaux d'importance distincts, le procédé comprenant les étapes pour une journée donnée de :

-   A partir de prévisions météorologiques, prédire une énergie électrique potentiellement disponible en sortie de la source d'énergie renouvelable,
-   Déduire au moins à partir de la prédiction de l'énergie électrique potentiellement disponible en sortie de la source d'énergie renouvelable, un crédit horaire de consommation électrique pour chaque niveau d'importance de sortie,
-   Délester les sorties d'un niveau d'importance donné lorsque le crédit horaire de consommation électrique qui était attribué à ce niveau a été atteint tout en délestant en priorité les sorties d'un niveau d'importance moindre. L'invention permet ainsi de classifier les différentes sorties de l'installation afin de privilégier en priorité l'alimentation des sorties les plus importantes, ce classement s'appuyant astucieusement sur les prévisions météorologiques du jour afin d'adapter les crédits horaires de consommation électrique selon la météo attendue. On assure ainsi un délestage intelligent des différentes sorties limitant les inconvénients de coupure pour les utilisateurs.

En conséquence, on diminue le facteur probabilité d'une perte de l'alimentation électrique de l'installation (encore appelé LPSP pour Loss of Power Supply Probability) . Optionnellement on classe les sorties selon trois niveaux d'importance distincts : un niveau d'importance haute, un niveau d'importance intermédiaire et un niveau d'importance basse.
Optionnellement on associe au moins l'une des sorties à une connectique limitant la consommation électrique. Optionnellement la sortie est celle d'importance la plus haute dans l'installation.
Optionnellement l'installation peut fonctionner dans un mode dégradé dans lequel le crédit horaire de consommation électrique est imposé.
Optionnellement on déduit le crédit horaire de consommation électrique pour chaque niveau d'importance de sortie en fonction également de l'état de charge de la batterie. Optionnellement on fixe un seuil minimal d'état de charge des batteries (SoC min), un seuil critique d'état de charge des batteries (SoC critique) et un seuil de ré-enclenchement possible au vu de l'état de charge des batteries (SoC ré-enclenchement) de sorte que

-   si le seuil SoC min est atteint toutes les sorties sont délestées ;
-   si le seuil SoC critique est atteint toute l'installation s'éteint.

Optionnellement les sorties ne sont réactivées que si le seuil SoC ré-enclenchement est dépassé.
Optionnellement on estime une consommation électrique au niveau des sorties pour la journée et on s'appuie également sur cette estimation pour déduire le crédit horaire de consommation électrique pour chaque niveau d'importance de sortie.

Optionnellement pour estimer une consommation électrique au niveau des sorties pour la journée on s'appuie sur au moins un enregistrement d'un profil de consommation électrique au niveau desdites sorties.

Optionnellement un crédit horaire de consommation électrique non consommé entièrement sur un créneau horaire n'est pas reporté sur le prochain créneau horaire. Optionnellement le procédé comporte l'étape de comparer au cours de la journée l'écart entre la prévision de l'énergie électrique maximale potentiellement disponible et une énergie électrique réellement produite et de recalculer en fonction les crédits horaires de consommation électrique suivants si la comparaison dépasse un seuil prédéterminé. Optionnellement pour prédire l'énergie électrique maximale potentiellement disponible en sortie de la source d'énergie renouvelable, le procédé se base sur des données de nébulosité, de température et d'indice UV.

L'invention concerne également un procédé comportant les étapes de :

-   mesurer une production électrique maximale réellement disponible au niveau de la source d'énergie renouvelable ;
-   estimer une production électrique maximale prévisionnelle à partir notamment des prévisions météorologiques ;
-   comparer ladite production électrique maximale prévisionnelle à ladite production électrique maximale réellement disponible pour prédire l'énergie électrique maximale potentiellement disponible en sortie de la source d'énergie renouvelable.

Optionnellement l'étape de comparer est mise en oeuvre par l'intermédiaire d'un filtre de KALMAN.

Optionnellement on estime une irradiance solaire maximale prévisionnelle à partir notamment des prévisions météorologiques, pour déterminer la production électrique maximale prévisionnelle.

Optionnellement l'installation est une installation de production photovoltaïque.

L'invention concerne également un organe de commande selon la revendication 18.

L'invention concerne également un programme d'ordinateur selon la revendication 19.

L'invention concerne également des moyens de stockage stockant un programme d'ordinateur comprenant des instructions pour mettre en oeuvre, par un organe de commande, le procédé tel que précité.

D'autres caractéristiques et avantages de l'invention ressortiront à la lecture de la description qui suit d'une mise en oeuvre particulière non limitative de l'invention.

BREVE DESCRIPTION DES DESSINS

L'invention sera mieux comprise à la lumière de la description qui suit en référence aux figures annexées parmi lesquelles :

[Fig. 1] la figure 1 illustre schématiquement une installation mettant en oeuvre l'invention selon une mise en œuvre particulière, installation associée à une ou plusieurs habitations ;

[Fig. 2] la figure 2 illustre schématiquement les principales étapes du procédé mis en oeuvre dans l'installation illustrée à la figure 1 ;

[Fig. 3] la figure 3 illustre schématiquement une première étape du procédé schématisé à la figure 2 ;

[Fig. 4] la figure 4 est une courbe montrant l'évolution de l'irradiance solaire théorique calculée à l'étape illustrée à la figure 3 en fonction de l'heure;

[Fig. 5] la figure 5 est une courbe montrant l'évolution de la puissance électrique prévisionnelle maximale en fonction de l'heure, calculée à partir de l'irradiance solaire théorique dont une courbe est présentée à la figure 4;

[Fig. 6] la figure 6 illustre schématiquement une deuxième étape et une troisième étape du procédé schématisé à la figure 2 ;

[Fig. 7] la figure 7 illustre schématiquement une cinquième étape du procédé schématisé à la figure 2.

DESCRIPTION DETAILLEE DE L'INVENTION

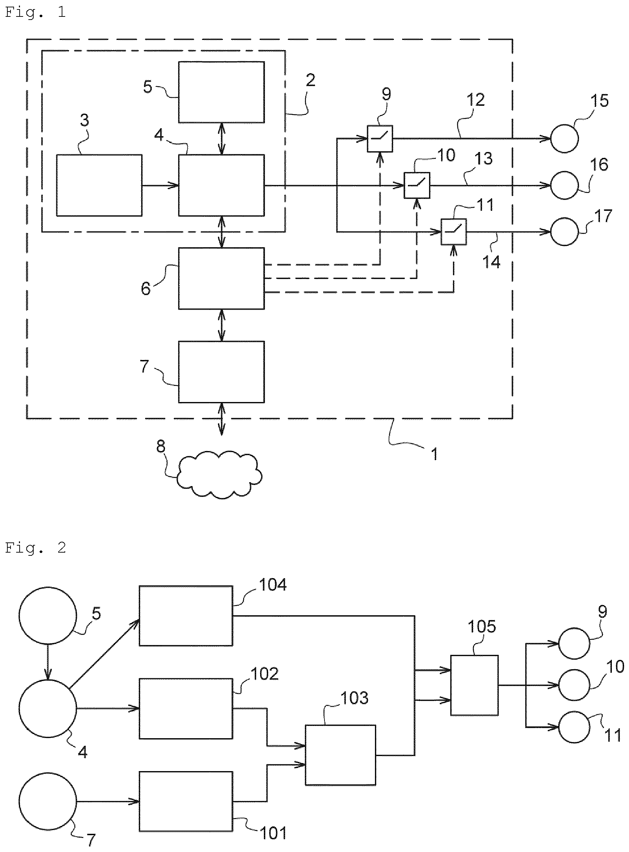

En référence à la figure 1, l'invention est ici mise en oeuvre dans une installation 1 de production d'énergie électrique, en l'occurrence dans une installation de production photovoltaïque. L'installation 1 est destinée à alimenter une ou plusieurs habitations comprenant des équipements électriques. A cet effet, l'installation 1 comporte au moins une sortie associée à au moins une prise électrique agencée dans l'une des habitations.

Dans le cas présent, l'installation 1 comporte trois sorties indépendantes les unes des autres. Selon un mode de réalisation particulier, l'installation 1 comporte ici une première sortie 12, une deuxième sortie 13 et une troisième sortie 14. La première sortie 12 est associée à une première prise électrique 15, la deuxième sortie 13 est associée à une deuxième prise électrique 16 et la troisième sortie 14 est associée à une troisième prise électrique 17. A la première sortie 12 est par ailleurs associé un premier contacteur 9, à la deuxième sortie 13 est associé un deuxième contacteur 10 et à la troisième sortie 14 est associé un troisième contacteur 11. L'installation 1 comprend en outre un dispositif de conversion d'énergie renouvelable en énergie électrique 2, en l'occurrence un dispositif de conversion d'énergie solaire en énergie électrique comprenant un seul panneau solaire 3, un régulateur solaire 4 et des batteries 5.

Le panneau solaire 3 transforme l'énergie solaire qu'il capte en une énergie électrique.

Le régulateur solaire 4 est un équipement électronique permettant notamment de convertir la tension continue photovoltaïque issue du panneau solaire 3 en une tension d'alimentation continue adaptée à la charge des batteries 5 et à l'alimentation de l'habitation. Le régulateur solaire 4 est ainsi connecté à la première sortie 12, à la deuxième sortie 13 et à la troisième sortie 14 pour délivrer ladite tension d'alimentation au niveau des trois sorties 12, 13, 14. La tension d'alimentation continue est par exemple égale à 48 Vdc. Le régulateur solaire 4 est typiquement de type régulateur MPPT (pour Maximum Power Point Tracking). Le régulateur solaire 4 joue ainsi ici principalement le rôle d'un onduleur solaire. Le régulateur solaire 4 est par ailleurs également configuré pour gérer dans le cas présent le stockage de l'énergie électrique dans les batteries 5.

A cet effet, les batteries 5 stockent l'énergie électrique lorsque celle-ci n'est pas utilisée directement pour alimenter l'habitation. Les batteries 5 sont par exemple de type Plomb-Acide.

L'habitation est ainsi alimentée, en fonction de l'heure et de l'ensoleillement, par le panneau solaire 3 et/ou par les batteries 5.

L'installation 1 comporte par ailleurs un organe de commande 6 qui va permettre la gestion de l'installation 1 et en particulier du régulateur solaire 4 et des contacteurs 9, 10, 11 associés aux sorties 12, 13, 14 de l'installation 1. L'organe de commande 6 comporte par exemple un ou plusieurs éléments de calcul tel qu'un processeur, un calculateur, un micro-contrôleur ... associé(s) à une mémoire comprenant un ou plusieurs programmes informatiques qui comprennent chacun des instructions agencées pour permettre à/aux élément(s) de calcul de mettre en œuvre le procédé selon une mise en œuvre particulière de l'invention.

L'organe de commande 6 est par ailleurs connecté à une interface de communication 7 de l'installation 1. Ladite interface de communication 7 est notamment en liaison (filaire ou non filaire) avec un ou plusieurs réseaux de communication 8 telle qu'une connexion internet. Grâce à cette interface de communication 7, l'organe de commande 6 peut récupérer des informations présentes sur un ou plusieurs réseaux de communication 8 pour gérer les sorties 12, 13, 14 de l'installation 1 et en particulier pour les délester (i.e. les couper) en agissant sur les contacteurs 9, 10, 11 associés.

Ainsi, en référence à la figure 2, chaque jour J, l'installation 1 se connecte au moins une fois à Internet, via son interface de communication 7: l'organe de commande 6 récupère ainsi des données de prévision météorologiques pour la journée J. A partir de là, l'organe de commande 6 va prédire une production d'énergie électrique maximale pour la journée J qu'il va comparer au fur et à mesure de la journée J au potentiel réel maximal de production d'énergie électrique de l'installation 1 (pour cela l'organe de commande 6 se base notamment sur des informations fournies par le régulateur solaire 4). Sur la base de cette comparaison, l'organe de commande 6 va pouvoir ajuster la stratégie de délestage des différents sorties 12, 13, 14 afin de privilégier certaines d'entre elles.

Le procédé selon une mise en oeuvre particulière de l'invention va être à présent détaillé.

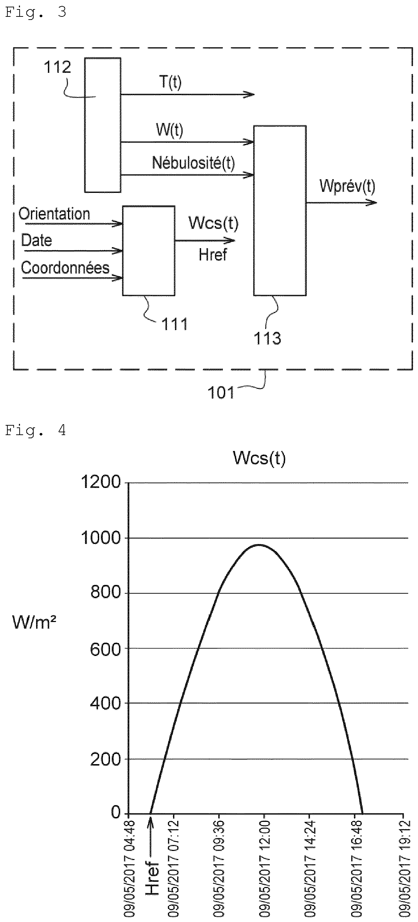

En référence aux figures 2 et 3, au cours d'une première étape 101, l'organe de commande 6 va prédire l'irradiance solaire prévisionnelle maximale $W_{prév}(t)$ pour la journée J en fonction de la météo notamment à partir de l'acquisition de données de prévisions météorologiques acquises au moins une fois au cours de la journée J (de préférence au moins une fois le matin très tôt avant le lever du soleil par exemple à minuit une).

Préférentiellement, pour mettre en œuvre cette première étape, en plus des données de prévisions météorologiques, l'organe de commande 6 va également se baser sur :

- des caractéristiques temporelles (jour, heure ...)
- des caractéristiques d'espace (géolocalisation du panneau solaire, orientation du panneau solaire...)

Cette première étape 101 comporte dans le cas présent trois phases 111, 112 et 113.

Au cours d'une première phase 111, le jour J avant le lever du soleil, on calcule tout d'abord l'irradiance solaire théorique maximale, à savoir $Wcs(t)$, en l'absence de nuage (soit une situation appelée « clearsky »). L'irradiance solaire théorique maximale est fonction de l'heure locale de l'installation et s'exprime en $W/m^2$.

Afin de calculer ladite irradiance solaire théorique maximale, l'organe de commande 6 s'appuie sur au moins les caractéristiques temporelles et d'espace suivantes :

- les coordonnées géographiques du panneau solaire 3,
- l'orientation du panneau solaire 3 (en particulier l'inclinaison du panneau solaire 3 et l'azimut du panneau solaire 3),
- la date du jour J considérée.

Ceci permet de déterminer à la fois la grandeur $Wcs(t)$ et à la fois l'heure de lever du jour J considéré $H_{ref}$.

Un exemple possible d'algorithme employé par l'organe de commande 6 pour estimer $Wcs(t)$ est par exemple reproduit à la fin de la présente description.

Les données d'entrées de cet algorithme sont les suivantes :

- time : format heure, minutes (minutes en base 10). *Exemple 8h30 -> 8,50*
- Date_jour : jour du mois 1 à 31. *Exemple 12*
- Date_mois : mois de l'année 1 à 12. *Exemple 6 (juin)*
- Date_annee : année. *Exemple 2019*
- Latitude : en degrés. *Exemple -18.96*
- Longitude : en degrés. *Exemple 49.2*
- Fuseau_horaire : en heure par rapport à GMT. *Exemple +3*
- Orientation_PV_Azimut : en degrés. Orientation_PV_Azimut est ainsi l'angle entre la normale au plan de l'objet étudié et le plan méridien du lieu :

Hémisphère nord : l'angle est défini à partir du sud géographique (0°), puis négatif vers l'est (anti trigonométrique)

Hémisphère sud : l'angle est défini à partir du nord géographique (0°), puis négatif vers l'est (trigonométrique)

*Exemple : site dans l'hémisphère sud, panneau orienté vers le nord géographique -> Valeur = 0*

- Orientation_PV_tilt : Inclinaison en degrés du panneau solaire par rapport au sol. 0 = horizontal, 90 = vertical.

*Exemple : 20*

- Albedo : Coefficient d'Albédo pour le calcul du rayonnement diffusé avec prise en compte du rayonnement réfléchi. Type de surface --> Coefficient d'Albédo de Bond (0 à 1)

   Surface de lac --> 0.02 à 0.04
   Forêt de conifères1 --> 0.05 à 0.15
   Forêt de feuillus1 --> 0.15 à 0.20
   Surface de la mer --> 0.05 à 0.15
   Sol sombre --> 0.05 à 0.15
   Cultures --> 0.15 à 0.25
   Sable léger et sec --> 0.25 à 0.45
   Calcaire2 --> environ 0.40
   Nuage --> 0.5 à 0.8
   Glace --> environ 0.60
   Neige tassée --> 0.40 à 0.70
   Neige fraîche --> 0.75 à 0.90
   Miroir parfait --> 1

   *Par défaut, le coefficient d'Albédo sera de 0.2*
- Altitude : en kilomètres. Exemple *: 0.002*
- Trouble_Linke ou TL : Valeur du trouble de Linke

   TL = 3,2 $\pm$ 0,5 en régions tempérées (mini en hiver : *2,5 à 3, maxi en été : 3,5 à 4*)
   *TL = 3,9 $\pm$ 0,4 en régions intertropicales humides (maxi en saison sèche : 4,5 à 5)*

Les données de sortie de cet algorithme sont les suivantes :

- Heure_lever_jour ou Href
- Heure_coucher_jour = heure du coucher du jour J
- G_Surface_Inclinee = $W_{cs}(t)$

La figure 4 montre l'évolution de l'irradiance solaire théorique maximale $W_{cs}(t)$ en fonction de l'heure locale ainsi que la valeur Href, obtenues par un tel algorithme. Au cours d'une deuxième phase 112, on acquiert les prévisions météorologiques pour le jour J avant le lever du soleil. A cet effet, l'interface de communication récupère les prévisions météorologiques par protocole de type API Collect, GPRS, LoRa ou tout autre protocole ou liaison communicante avec des serveurs météorologiques tels que Météo France, AccuWeather, NOAA ... et les transmets à l'organe de commande.

L'organe de commande acquiert en particulier les données suivantes : nébulosité, température et indice UV.

On rappelle que l'indice UV est une échelle de mesure de l'intensité du rayonnement ultraviolet émis par le soleil, l'indice UV pouvant prendre une valeur variant entre 0 et 11.

On rappelle par ailleurs que la nébulosité définit la couverture nuageuse, la nébulosité pouvant prendre une valeur variant entre 0% (aucun nuage visible dans le ciel) et 100% (aucun ciel visible).

Dans le cas présent, la température est la température ambiante à l'ombre.

Préférentiellement, les données précitées sont fournies à l'organe de commande en fonction de l'heure locale soit nébulosité(t), UV(t) et température(t) [parfois appelée T(t)].

Lors d'une troisième phase 113 de la première étape 101, l'organe de commande adapte l'irradiance solaire théorique maximale $W_{cs}(t)$ estimée à la première phase 111 aux prévisions météorologiques du jour J obtenues à la deuxième phase 112 afin d'obtenir une irradiance solaire prévisionnelle maximale $W_{prév}(t)$.

Par exemple, l'organe de commande 6 applique la formule ci-dessous :

$$W_{prév}(t) = W_{cs}(t) - W_{cs}(t)*(nébulosité(t)/100*(1-UV(t)/11))$$

Ainsi dans le cas présent, l'irradiance solaire prévisionnelle maximale $W_{prév}(t)$ prend en compte comme données prévisionnelles météorologiques uniquement la nébulosité et l'indice UV.

La température(t) va être prise en compte au cours d'une troisième étape 103 qui va être décrite plus loin.

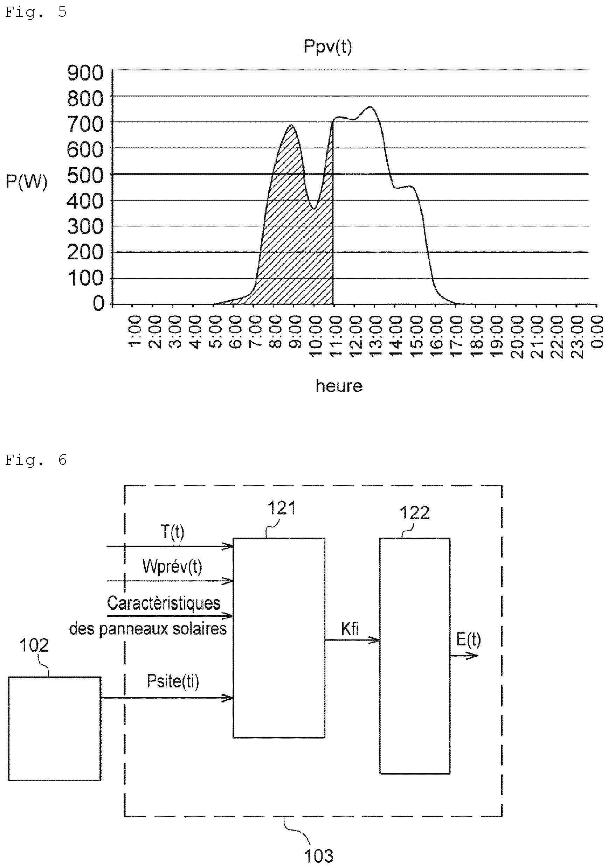

Comme illustré à la figure 6, dans une deuxième étape, l'organe de commande 6 va récupérer du régulateur solaire 4 des données de la puissance électrique maximale réellement disponible au niveau du panneau solaire 3 en fonction de l'heure locale au cours de la journée J.

En effet, en fonctionnement, le régulateur solaire 4 peut parfois exploiter l'énergie solaire du panneau solaire 3 au niveau maximal disponible grâce à sa fonction MPPT (on dit alors qu'on est au point de fonctionnement MPPT) : il suffit alors d'estimer la puissance fournie par le panneau solaire 3 à cet instant et de stocker cette valeur dans un tableau.

Afin de déterminer quand le régulateur solaire 4 est au point MPPT, on peut par exemple utiliser une mini-cellule photovoltaïque témoin non connectée (de conception strictement identique aux cellules du panneau solaire) dont on mesure la tension à vide ($V_{oc}$). Une caractéristique d'un panneau solaire poly- ou mono- cristallins est de vérifier la relation suivante :

$$V_{mpp} = K*V_{oc}$$

*avec K = coefficient de construction du panneau solaire 3 (pris ici environ égal à 0.8)*

*$V_{mpp}$ = tension au point de fonctionnement MPPT (à puissance maximale disponible en sortie du panneau solaire 3) (pour une température du panneau solaire 3 et une irradiance au droit du panneau solaire 3 considérées à l'instant correspondant)*

*$V_{oc}$ = tension à vide du panneau solaire 3 (pour une température du panneau solaire 3 et une irradiance au droit du panneau solaire 3 considérées à l'instant correspondante dont la valeur est donnée dans le cas présent par la mesure de la tension à vide de la mini-cellule témoin.*

On fait en conséquence l'hypothèse que le régulateur solaire 4 est au point de fonctionnement MPPT si $V_{pv}(t)$ respecte la formule suivante : [K*$V_{oc}$ - 5% < $V_{pv}(t)$ < K*$V_{oc}$ + 5%] avec $V_{pv}(t)$ tension en sortie du panneau solaire. Ainsi si le point de fonctionnement MPPT est atteint à l'instant $t_i$ du jour J, il ne reste plus qu'à calculer la puissance électrique maximale disponible au niveau du panneau solaire 3 à cet instant:

$$P_{site}(ti) = V_{pv}(ti)*I_{pv}(ti)$$

*avec $I_{pv}(ti)$ = courant en sortie du panneau solaire.*

$P_{site}(ti)$ est ensuite être stockée dans la mémoire de l'organe de commande 6.

La mémoire contient donc une pluralité de valeurs $P_{site}(ti)$ puisqu'à chaque fois que le point de fonctionnement MPPT est atteint à l'instant $t_i$ du jour J, la valeur $P_{site}(ti)$ correspondante est enregistrée.

La troisième étape 103 va comporter deux phases. Au cours d'une première phase 121, l'organe de commande 6 va estimer des coefficients de correction (Kk1, ..., Kkn), encore appelés coefficients de fiabilité, pour permettre une comparaison entre puissance électrique maximale réellement disponible au niveau du panneau solaire $P_{site}(ti)$ calculées à la deuxième étape et puissance électrique prévisionnelle maximale $P_{PV}$ (t). Au cours d'une deuxième phase 122, l'organe de commande 6 va alors calculer l'énergie électrique maximale potentiellement disponible E(t) au niveau du panneau solaire à partir desdits coefficients de correction (Kk1, ..., Kkn).

Un exemple d'algorithme pour prédire l'énergie électrique maximale potentiellement disponible E(t) lors de cette troisième étape 103 va être à présent décrit.

La puissance électrique prévisionnelle maximale $P_{pv}(t)$ (désignée par $P_{mpp}(t)$ par la suite) est définie à partir de caractéristiques de l'installation 1, et au moins du panneau solaire 3 (type de panneau solaire, nombre de panneaux solaires, type de régulateur solaire, ...), mais également de l'irradiance solaire prévisionnelle maximale $W_{prév}$ (t) précédemment estimée et de la température (t).

Dans le cas présent, les caractéristiques du panneau solaire 3 sont fournies par le constructeur et sont des valeurs prises à la température nominale de fonctionnement des cellules du panneau solaire 3 (également appelée NOCT pour Nominal Operating Cell Temperature), ladite température étant atteinte lors des conditions suivantes : Irradiance sur la surface des cellules = 800 W/m$^2$

Température de l'air = 20°C
Vitesse du vent = 1 m/s

$$P_{mmp}(t) = I_{mpp}(t) * V_{mpp}(t)$$

avec :

$$I_{mpp}(t) = W_{prév}(t) * [I_{mpp\_stc}/S_{\_stc} + \mu a/S_{\_noct} * (T_{pv\_noct} - T_{0\_noct})] + T(t) * \mu a - \mu a * T_{pv\_stc}$$

$$V_{mpp}(t) = W_{prév}(t) * \mu v/S_{\_noct} * [T_{pv\_noct} - T_{0\_noct}] + T(t) * \mu v - \mu v * T_{pv\_stc} + V_{mpp\_stc}$$

Sachant que les conditions standardisée NOCT et STC (pour Standard Test Conditions, conditions de test standard) définissent :

$S_{\_stc}$ = 1000W/m$^2$
$S_{\_noct}$ = 800W/m$^2$
$T_{pv\_noct}$ = 45°C
$T_{pv\_stc}$ = 25°C
$T_{0\_noct}$ = 20°C

Et que les données constructeurs donnent :

$\mu a$ = coefficient de détarage (plus connu sous le terme de derating coefficient en anglais) en température du courant délivrable par le panneau solaire 3 au point de fonctionnement MPPT ;
$\mu V$ = coefficient de détarage en température de la tension délivrable par le panneau solaire 3 au point de fonctionnement MPPT ;
$I_{mpp\_stc}$ = courant au point de fonctionnement MPPT délivrable par le panneau solaire 3 dans les conditions STC ;
$V_{mpp\_stc}$ = tension au point de fonctionnement MPPT délivrable par le panneau solaire 3 dans les conditions STC.

On en déduit que la loi d'évolution théorique de la puissance électrique prévisionnelle maximale $P_{mpp}(t)$, en fonction de $W_{prév}(t)$ et T(t), est de forme polynomiale :

$$P_{mpp}(t) = a_2 * W_{prev}^2(t) + a_1 * W_{prev}(t) + b_2 * T^2(t) + b_1 * T(t) + c * W_{prev}(t)T(t) + d$$

où $a_2$, $a_1$, $b_2$, $b_1$, c et d sont des coefficients constants dépendant des paramètres [$S_{\_stc}$, $S_{\_noct}$, $T_{pv\_noct}$, $T_{pv\_stc}$, $T_{0\_noct}$,

$\mu$a, $\mu$V, $I_{mpp\_stc}$, $V_{mpp\_stc}$] décrits précédemment. On va à présent établir une équation d'état déterministe d'un système correspondant.

De la loi polynomiale précédente on déduit immédiatement :

$$\frac{\partial P_{mpp}}{\partial t} = 2a_2 \frac{\partial \bar{W}_{prev}}{\partial t} W_{prev} + a_1 \frac{\partial \bar{W}_{prev}}{\partial t} + 2b_2 \frac{\partial T}{\partial t} T + b_1 \frac{\partial T}{\partial t} + c[\frac{\partial W_{prev}}{\partial t} T + \frac{\partial T}{\partial t} W_{prev}]$$

On en conclut donc que l'équation d'état du système peut se mettre sous la forme :

$$\frac{\partial P_{mpp}}{\partial t} = F[P_{mpp}(t); Z(t)]$$

Où :

F = fonction non linéaire ;

$$Z(t) = \begin{pmatrix} W_{prev}(t) \\ T(t) \\ \frac{\partial W_{prev}}{\partial t} \\ \frac{\partial T}{\partial t} \end{pmatrix}$$

Cette équation peut se linéariser sur un intervalle de temps $[t_k ; t_{k+1}[$ en utilisant le jacobien de la fonction F

$$\frac{\partial P_{mpp}}{\partial t} = \frac{\partial F}{\partial P_{mpp}}(t_k) * [P_{mpp}(t) - P_{mpp}(t_k)] + \frac{\partial F}{\partial Z}(t_k) * [Z(t) - Z(t_k)]$$

Ce qui donne :

$$\forall\, t \in [t_k; t_{k+1}[$$

$$\frac{\partial P_{mpp}}{\partial t} = \frac{\partial F}{\partial P_{mpp}}(t_k) * P_{mpp}(t) + \frac{\partial F}{\partial Z}(t_k) * Z(t) - \frac{\partial F}{\partial P_{mpp}}(t_k) * P_{mpp}(t_k) - \frac{\partial F}{\partial Z}(t_k) * Z(t_k)$$

$$(1)$$

avec

$$\frac{\partial F}{\partial Z} = \left( \frac{\partial F}{\partial W_{prev}}, \frac{\partial F}{\partial T}, \frac{\partial F}{\partial(\frac{\partial W_{prev}}{\partial t})}, \frac{\partial F}{\partial(\frac{\partial T}{\partial t})} \right)$$

Or ce système défini de manière déterministe par les équations précédentes est, en fait, soumis aux incertitudes des prévisions météorologiques que nous considérerons comme des aléas à introduire dans ledit système.

Si on considère dans l'équation d'état (1) que le terme ne dépendant que de l'instant initial $t_k$, est aléatoire car dépendant de l'incertitude des prévisions initiales d'irradiance $W_{prev}(t_k)$ et de température $T(t_k)$, on propose de réécrire l'équation d'état sous la forme :

$$\forall\, t \in [t_k; t_{k+1}[:$$

$$\begin{cases} \frac{\partial P_{mpp}}{\partial t} = \frac{\partial F}{\partial P_{mpp}}(t_k) * P_{mpp}(t) + \frac{\partial F}{\partial Z}(t_k) * Z(t) - \frac{\partial F}{\partial P_{mpp}}(t_k) * b_k(t) \\ P_{site}(t) = P_{mpp}(t) + m(t) \end{cases} \qquad (2)$$

Où :

$P_{site}(t)$ = mesure réelle du paramètre $P_{mpp}(t)$ (selon ce qui a été indiqué pour la deuxième étape) . On rappelle ainsi qu'en réalité on ne connaît pas la valeur continue de $P(t)$ puisque l'on acquiert $P_{site}$ uniquement lorsque l'on est au point de fonctionnement MPPT : on ne dispose en conséquence que des valeurs $P_{site}(t_1),..., P_{site}(t_k), P_{site}(t_{k+1}),..., P_{site}(t_n)$ sur la journée J.

$b_k(t)$ = signal aléatoire de dimension (1x1) représentant l'incertitude pesant sur la prévision des valeurs d'irradiance $W_{prev}(t)$ et de température $T(t)$.

$m(t)$ = signal aléatoire de dimension (1x1) représentant l'incertitude pesant sur la mesure $P_{site}(t)$.

On va à présent appliquer la méthode de filtre de KALMAN afin de déterminer la loi d'évolution estimée de la puissance maximale délivrable $P_{mpp\_est}(t)$ par le panneau solaire 3.

Pour la suite on pose les hypothèses suivantes.

- $b(t)$ = bruit blanc gaussien de dimension (1x1) de densité de probabilité B constante et uniformément répartie

```
E[b(t)b(t+τ)] = Bₖ*δ(t) (moment d'ordre 2 du signal
aléatoire b(t) avec δ(t) = fonction de Dirac)
```

Avec :

$$B_k = \frac{[P_{site}(t_k) - P_{site}(t_{k-1})]^2}{12}$$

- $m(t)$ = bruit blanc gaussien de dimension (1x1) de densité de probabilité M constante et uniformément répartie

```
E[m(t)m(t+τ)] = M*δ(t) (moment d'ordre 2 du signal
aléatoire m(t) avec δ(t) = fonction de Dirac)
```

Avec :

$$M = 8.33 * 10^{-4} * P_{nom\_PV}^2$$

Où :

on a supposé une erreur de plus ou moins 5%, soit 10% en valeur absolue, sur la mesure réelle de $P_{mpp}$ (on rappelle que $P_{site}(t)$ = mesure réelle de $P_{mpp}(t)$) $P_{nom\_PV}$ = puissance nominale du panneau solaire 3 (donnée fournie par le constructeur).

Moyennant les hypothèses précédentes, on montre qu'on peut se ramener, à partir de l'équation de base du système linéarisée (2), à l'équation différentielle suivante permettant de déterminer l'estimateur optimisé de KALMAN de la puissance maximale délivrable $P_{mpp\_est}(t)$ :

$$\forall\, t \in [t_k; t_{k+1}[:$$

$$\frac{\partial P_{mpp\_est}}{\partial t} = \frac{\partial F}{\partial P_{mpp}}(t_k) * P_{mpp\_est}(t) + \frac{\partial F}{\partial Z}(t_k) * Z(t) + K_k(t) \\ * [P_{mpp\_est}(t_k) - P_{site}(t_k)]$$

Où $K_k(t)$, le correcteur de KALMAN permettant de minimiser l'erreur d'estimation, est donc défini par l'équation suivante :

$$\forall\, t \in [t_k; t_{k+1}[:$$

$$\frac{\partial E[\varepsilon(t)^2]}{\partial K_k} = 0$$

Où :

$$\varepsilon(t) = P_{mpp\_est}(t) - P_{mpp}(t) \text{ et } E[\varepsilon(t)^2] = \text{moment d'ordre 2 de } \varepsilon(t)$$

ce qui conduit à l'équation de Ricatti suivante permettant de déterminer $K_k(t)$ :

$$\forall\, t \in [t_k; t_{k+1}[:$$

$$\frac{\partial K_k}{\partial t} = 2 * \frac{\partial F}{\partial P_{mpp}}(t_k) * K_k(t) - K_k(t)^2 + \frac{B_k}{M} * \left(\frac{\partial F}{\partial P_{mpp}}(t_k)\right)^2$$

L'objectif étant de calculer une loi prédictive, sur 24 heures, de la puissance maximale délivrable $P_{mpp\_est}(t)$, les équations établies précédemment sont résolues numériquement via un algorithme implanté dans l'organe de commande.

Cet algorithme peut se décliner selon les étapes suivantes sur un jour N.

On effectue :

- des mesures de puissance maximale délivrable $P_{site}$ aux instants (t1,..., tn) du jour N où la puissance maximale délivrable par le panneau solaire 3 est effectivement demandée par la charge des batteries 5 et les utilisateurs tels que (selon ce qui a été dit pour la deuxième étape) :
Tlever-soleil-N < t1 < ...< tn < Tcoucher-soleil-N
[Psite(t1), Psite(t1), ..., Psite(tn)]
- des acquisitions de prévisions météorologiques pour le jour N, permettant le calcul du vecteur Z(t) à un pas d'échantillonnage régulier dT0 :

$$[Z(T_{lever-soleil-N}) = \begin{pmatrix} W_{prev}(T_{lever-soleil-N}) \\ T(T_{lever-soleil-N}) \\ \frac{\partial W_{prev}}{\partial t}(T_{lever-soleil-N}) \\ \frac{\partial T}{\partial t}(T_{lever-soleil-N}) \end{pmatrix}, Z(T_{lever-soleil-N} + dT0), Z(T_{lever-}$$

soleil-N + 2*dT0),...., Z(Tcoucher-soleil-N)]

sachant que la largeur du pas d'échantillonnage devra être choisie de manière à être certain de vérifier la relation

$$dT0 < min_k[t_{k+1} - t_k]$$

A partir là on calcule le correcteur de KALMAN en résolvant numériquement l'équation de Ricatti suivante, par discrétisation sur l'intervalle [$t_k$ ;$t_{k+1}$[ selon le pas d'échantillonnage dT0 :

$$\forall t \in [t_k; t_{k+1}[:$$

$$\frac{\partial K_k}{\partial t} = 2 * \frac{\partial F}{\partial P_{mpp}}(t_k) * K_k(t) - K_k(t)^2 + \frac{B_k}{M} * \left(\frac{\partial F}{\partial P_{mpp}}(t_k)\right)^2$$

Du fait que l'on enregistre des valeurs discrétionnaires pour Psite aux instants $t_k$ où le point de fonctionnement MPPT est atteint, on calcule un nouveau correcteur de KALMAN Kk (i.e. un nouveau coefficient de correction dans le cas présent) pour chaque intervalle de temps délimité entre deux valeurs enregistrées successives de Psite. En conséquence, les valeurs Psite étant enregistrées au fur et à mesure de la journée N, de nouveaux coefficients de correction Kk sont également régulièrement calculés sur la journée N. Ceci permet d'adapter la correction au cours de la journée.

Ainsi, avant le lever du jour de la journée N, on se base sur les valeurs Psite de la journée N-1 pour calculer le correcteur de KALMAN puis on adapte au fur et à mesure de la journée ce correcteur aux valeurs Psite du jour.

On adapte en conséquence avantageusement les stratégies de délestage qui vont être décrites ci-dessous en cours de journée selon la production énergique réelle du jour N. Par ailleurs, on peut également souhaiter acquérir en cours de journée des nouvelles données de prévision météorologiques pour le reste du jour N afin que le correcteur de KALMAN soit également adapté en cours de journée à ce niveau.

Ceci permet encore davantage d'affiner les stratégies de délestage à la situation actuelle.

A partir du correcteur de KALMAN, au cours d'une deuxième phase 122, on effectue un calcul numérique de la loi d'évolution estimée de la puissance maximale délivrable $P_{mpp\_est}(t)$, par discrétisation de l'équation différentielle suivante sur l'intervalle [$t_k$ ;$t_{k+1}$[ selon le pas d'échantillonnage dT0 :

$$\forall t \in [t_k; t_{k+1}[:$$

$$\frac{\partial P_{mpp\_est}}{\partial t} = \frac{\partial F}{\partial P_{mpp}}(t_k) * P_{mpp\_est}(t) + \frac{\partial F}{\partial Z}(t_k) * Z(t) + K_k(t) * [P_{mpp\_est}(t_k) - P_{site}(t_k)]$$

On détermine alors numériquement l'énergie électrique maximale potentiellement disponible E(t) par intégration :

$$E(T_{lever-soleil-N} + n * dT0) = dT0 * \sum_{i=0}^{j=n} P_{mpp\_est}(T_{lever-soleil-N} + i * dT0)$$

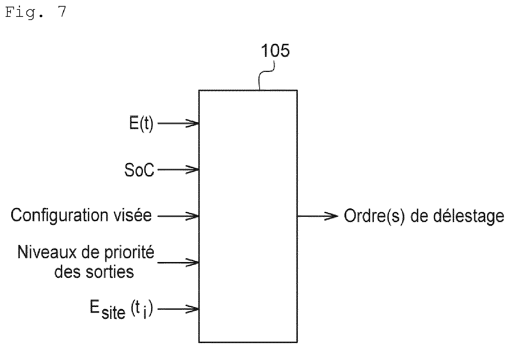

A partir de l'énergie électrique maximale potentiellement disponible E(t), l'installation 1 va pouvoir mettre en oeuvre des stratégies de délestages intelligentes au cours d'une quatrième étape 104 et d'une cinquième étape 105 représentées schématiquement aux figures 2 et 7.

En particulier l'installation 1 permet de classifier les sorties de l'installation 1 selon des niveaux d'importances distinctes :

- la première sortie 12 est ainsi classée comme étant d'importance haute,
- la deuxième sortie 13 est ainsi classée comme étant d'importance moyenne,
- la troisième sortie 14 est ainsi classée comme étant d'importance basse.

La première sortie 12 permet donc d'alimenter des équipements d'urgence (radio, rechargement de téléphone portable, ...). La deuxième sortie 13 permet d'alimenter des équipements essentiels (éclairage, réfrigérateur ...). La troisième sortie 14 permet d'alimenter des équipements de confort (ventilation, télévision, chaine Hi-Fi ...).

De préférence, la première sortie 12 (de niveau d'importance haute) est conformée pour être peu consommatrice en alimentation électrique. Par exemple la première sortie 12 est utilisable via une connectique limitant la consommation électrique telle qu'une prise USB. De préférence, la classification des sorties 12, 13, 14 est effectuée par un opérateur distant.

Selon un mode de réalisation particulier, l'installation 1 est conformée pour pouvoir fonctionner selon deux modes distincts :

- un premier mode dit « automatique » permettant la répartition de l'énergie électrique entre les différentes sorties 12, 13, 14 en fonction notamment de l'estimation de l'énergie électrique maximale potentiellement disponible E(t) mais également de l'état de charge des batteries 5, le premier mode étant le mode par défaut ;
- un deuxième mode dit de « secours » qui est en réalité un mode dégradé mis en oeuvre dans des cas particuliers (catastrophes naturelles tels que cyclone, inondation ..., état urgence lié à la sécurité, etc....), le deuxième mode étant de préférence activable à distance par l'opérateur. On va à présent décrire le premier mode « automatique ». Préférentiellement, l'opérateur peut configurer ce premier mode automatique. De préférence, il est possible de reconfigurer le premier mode automatique à tout moment. Une première possibilité de configuration consiste en la répartition des sorties 12, 13, 14 de l'installation selon l'un des trois niveaux d'importance précitées (haute, intermédiaire, basse).

Une deuxième possibilité de configuration consiste en la répartition d'énergie électrique entre les trois niveaux d'importance précités (haute, intermédiaire, basse). Par exemple l'opérateur indique un pourcentage d'énergie électrique dédiée à chaque niveau d'importance, étant entendu que l'installation est programmée pour n'autoriser ces indications que si le niveau d'importance haute reçoit un pourcentage plus important que le niveau d'importance intermédiaire qui lui-même doit recevoir un pourcentage plus important que le niveau d'importance bas.

Une troisième possibilité de configuration consiste à fixer le profil de consommation au cours de la journée. Par exemple l'installation 1 peut proposer deux formules de répartition :

- une première formule « répartition horaire » dans laquelle l'opérateur indique la consommation énergétique souhaitée (par exemple par un pourcentage) heure par heure ;
- une deuxième formule « répartition jour/nuit » dans laquelle l'opérateur indique la consommation énergétique souhaitée (par exemple par un pourcentage) pour la journée (du lever au coucher du soleil) et pour la nuit (du coucher au lever du soleil).

Bien entendu les différentes possibilités de configuration peuvent être mixées entre elles.

En conséquence, à partir de cette configuration, à chaque lever du jour (Href), l'organe de commande 6 fixe automatiquement le crédit horaire de consommation électrique de chaque niveau de sorties (haute, intermédiaire, basse) au cours de la journée.

Pour cela l'organe de commande 6 se base sur l'énergie électrique maximale potentiellement disponible E(t) du jour calculée comme indiqué précédemment mais également l'état de charge des batteries (SoC pour State of Charge) au lever du jour (Href) ainsi que l'énergie stockée dans les batteries 5 disponible (lié à l'état de charge des batteries 5 et à la profondeur de décharge autorisée des batteries 5). Dans le cas présent, l'état de charge et l'énergie stockée dans les batteries 5 sont des données mesurées par le régulateur solaire 4 et fournies à l'organe de commande 6 au cours d'une quatrième étape 104.

En effet, en plus de fournir une alimentation sur les différentes sorties, l'installation 1 doit également veiller à recharger les batteries 5 :

- pour atteindre un objectif d'état de charge avant le coucher de soleil (notamment afin de pouvoir alimenter si demandé les équipements raccordés aux sorties 12, 13, 14 durant la nuit) et/ou
- ne pas descendre sous un certain seuil de décharge prédéterminée des batteries 5 afin de les préserver.

Par exemple on impose un état de charge des batteries 5 de 95% minimum en fin de journée. On peut ainsi calculer l'énergie électrique qui doit être réservée pour chaque batterie 5 comme suit : (Objectif SoC de 95% - SoC mesurée au lever du jour) * Capacité de la batterie (en Ah) * Tension nominale de la batterie * Rendement de la batterie. Ceci permet d'augmenter la durée de vie de la ou des batteries 5 de l'installation.

L'organe de commande 6 privilégie bien entendu d'abord la sortie d'importance haute 12 puis la sortie d'importance intermédiaire 13 puis la sortie d'importance basse 14 dans cette fixation de crédit horaire de consommation électrique.

De préférence, pour fixer le crédit horaire de consommation électrique, l'organe de commande 6 prend également en compte les différentes pertes de rendement possibles dans l'installation 1.

En service, l'organe de commande 6 compare la consommation d'énergie au niveau de chaque sortie 12, 13, 14 au crédit horaire de consommation électrique accordé et contrôle les contacteurs 9, 10, 11 des sorties de sorte que lorsque la consommation d'énergie d'un créneau horaire d'un niveau d'importance donnée de sorties a atteint le crédit horaire de consommation électrique accordé, la sortie correspondante est délestée (i.e. coupée) jusqu'au créneau horaire suivant. L'organe de commande 6 ayant privilégié d'abord la sortie d'importance haute 12 puis la sortie d'importance intermédiaire 13 puis la sortie d'importance basse 14 lors de la fixation des crédits horaires de consommation électrique, si l'énergie disponible globale est insuffisante dans le créneau horaire considéré, la sortie d'importance basse 14 sera la première délestée puis la sortie d'importance intermédiaire 13 puis la sortie d'importance haute 12.

Par ailleurs, dans le cas présent, on fixe un seuil minimal d'état de charge des batteries (SoC min), un seuil critique d'état de charge des batteries (SoC critique) et un seuil de ré-enclenchement possible au vu de l'état de charge des batteries (SoC ré-enclenchement). On a ainsi SoC ré-enclenchement > SoC min > SoC critique.

L'organe de commande 6 est ainsi configuré pour :

- si le seuil SoC min est atteint délester toutes les sorties 12, 13, 14 et les réactiver automatiquement dès que le seuil SoC re-enclenchement est atteint (en privilégiant d'abord la sortie d'importance haute 12 puis la sortie d'importance intermédiaire 13 puis la sortie d'importance basse 14) ;
- si le seuil SoC critique est atteint toute l'installation 1 s'éteint.

Dans ce dernier cas, une action manuelle sera nécessaire pour redémarrer l'installation 1 et malgré tout le démarrage ne pourra se faire que si l'énergie solaire est disponible et suffisante. En revanche, les sorties 12, 13, 14 ne seront réactivées automatiquement que si le seuil SoC ré-enclenchement est de nouveau atteint (en privilégiant d'abord la sortie d'importance haute 12 puis la sortie d'importance intermédiaire 13 puis la sortie d'importance basse 14).

Par ailleurs, un crédit horaire de consommation électrique non consommé entièrement sur un créneau horaire n'est pas reporté sur le prochain créneau horaire.

Comme déjà indiqué, l'organe de commande 6 récupère du régulateur solaire 4 tout au long de la journée des données sur la production maximale d'énergie réelle (via les valeurs $P_{site}$). Si l'écart entre une prévision de l'énergie électrique maximale potentiellement disponible $E(t)$ et une production d'énergie réelle $E_{site}(t_i)$ (calculée à partir des valeurs $P_{site}(t_i)$) dépasse un seuil alors les crédits horaires de consommation électrique suivants sont automatiquement recalculés en fonction de l'écart constaté.

Si le deuxième mode « secours » est enclenché, l'organe de commande 6 reçoit un message d'activation du deuxième mode, message fournissant directement les crédits horaires de consommation électrique selon une répartition horaire donnée. Ce message d'activation indique également combien de temps le deuxième mode doit être maintenu. En l'absence de réception d'un nouveau message prolongeant l'utilisation de l'installation 1 dans le deuxième mode, l'organe de commande 6 rebascule l'installation 1 dans le premier mode à la fin du temps indiqué dans le message. De préférence, dans le deuxième mode, la sortie d'importance basse 14 est automatiquement délestée pendant toute la durée dudit mode. Les crédits horaires indiqués dans le message concernent donc uniquement la sortie d'importance haute 12 et celle d'importance intermédiaire 13.

Par ailleurs, une fois basculé dans le deuxième mode, l'organe de commande 6 compare la consommation d'énergie au niveau de chaque sortie au crédit horaire de consommation électrique accordé et contrôle les contacteurs 9, 10, 11 des sorties 12, 13, 14 de sorte que lorsque la consommation d'énergie d'un créneau horaire d'un niveau donné de sorties a atteint le crédit horaire de consommation électrique affecté, la sortie correspondante est délestée (i.e. coupée) jusqu'au créneau horaire suivant. L'organe de commande 6 ayant privilégié d'abord la sortie d'importance haute 12 puis la sortie d'importance intermédiaire 13, si l'énergie disponible globale est insuffisante dans le créneau horaire considéré, la sortie d'importance intermédiaire 13 sera la première délestée puis la sortie d'importance haute 12.

En outre l'organe de commande 6 est également configuré pour :

- si le seuil SoC min est atteint délester toutes les sorties 12, 13 et les réactiver automatiquement dès que le seuil SoC re-enclenchement est atteint (en privilégiant d'abord la sortie d'importance haute 12 puis la sortie d'importance intermédiaire 13);
- si le seuil SoC critique est atteint toute l'installation 1 s'éteint.

Dans ce dernier cas, une action manuelle sera nécessaire pour redémarrer l'installation 1 et malgré tout le démarrage ne pourra se faire que si l'énergie solaire est disponible et suffisante. En revanche, les sorties 12, 13 ne seront réactivées automatiquement que si le seuil SoC ré-enclenchement est de nouveau atteint (en privilégiant d'abord la sortie d'importance haute 12 puis la sortie d'importance intermédiaire 13).

Par ailleurs, un crédit horaire de consommation électrique non consommé entièrement sur un créneau horaire n'est pas reporté sur le prochain créneau horaire.

On retient que dans le deuxième mode, l'organe de commande 6 n'est pas configuré pour recalculer les crédits horaires de consommation électrique en fonction de l'écart entre énergie électrique potentiellement disponible $E(t)$ et production d'énergie réelle.

On a ainsi décrit une installation 1 permettant un délestage intelligent de ses sorties de puissance, délestage basé notamment sur des prévisions météorologiques et un calcul qui en découle de prédiction de l'énergie électrique maximale disponible sur la journée en fonction de l'ensoleillement prévu, prévision évoluant en outre avantageuse au cours de la journée (grâce aux nouvelles mesures enregistrées $P_{site}$ et éventuellement l'acquisition actualisée de nouvelles prévisions météorologiques).

Le délestage s'appuie également sur des niveaux d'importance définis par l'opérateur et un état de charge des batteries.

Bien entendu, l'invention n'est pas limitée au mode de mise en oeuvre ci-dessus et on peut y apporter des variantes de réalisation sans sortir du cadre de l'invention tel que défini par les revendications.

Bien que l'on ait indiqué que l'installation était une installation de production photovoltaïque, l'invention s'applique à tout type d'installation de production d'énergie électrique à partir de tout type d'énergie renouvelable.

De même, l'aménagement alimentée par l'installation n'est pas nécessairement une habitation mais peut-être par exemple un centre médical, un site de télécommunication ... On pourra avoir plusieurs installations gérées simultanément par le procédé selon l'invention pour alimenter des mêmes sorties. Par ailleurs on pourra avoir plusieurs aménagements raccordés à des mêmes sorties gérées par l'invention.

Le nombre de sorties de l'installation indiqué n'est bien entendu pas limitatif et l'on pourra avoir une installation comprenant davantage ou moins de sorties. On pourra ainsi avoir une sortie pour chaque équipement et/ou avoir une sortie pour niveau d'importance donnée, sortie qui sera ensuite découpée au niveau de l'habitation en sous-sortie (par exemple plusieurs prises pourront être raccordées à une même sortie).

D'autres agencements d'installations sont envisageables. Par exemple les batteries pourront directement être contrôlées par l'organe de commande et non par l'intermédiaire du régulateur solaire. L'installation pourra comporter un plus grand nombre de panneaux solaires. Pour le traitement prédictif de la troisième étape, d'autres alternatives sont envisageables. Par exemple l'implémentation du filtre de KALMAN pour le calcul de Pmpp_est peut se révéler gourmande en ressource de traitement. Ainsi une méthode, plus simple mais moins précise, utilisant un coefficient de pondération basé sur l'indice de confiance des prévisions météorologiques pourrait se révéler être une solution alternative, traduite par une loi linéaire du type :

$$\forall\, t \in [t_k; t_{k+1}[:$$

$$P_{mpp\_est}(t) = \mu * P_{mpp}(t) + (1 - \mu) * P_{site}(t_k)$$

Avec

Pmmp(t) puissance électrique maximale délivrable par le panneau solaire et calculée en fonction des variables d'entrée T(t) et $W_{prev}(t)$ issues des prévisions météorologiques recueillies au pas d'échantillonnage temporel dT0, $\mu$ = indice de confiance de la prévision météorologique fournissant le calcul de [$W_{prev}(t)$, T(t)] et généralement fourni par le site de prévision météorologique (compris entre 0 et 1 : 0 signifiant qu'aucune confiance n'est accordée aux prévisions et 1 signifiant qu'une confiance totale est accordée).

Un exemple de calcul de Pmmp(t) (puissance électrique maximale délivrable par le panneau solaire) va être à présent décrit.

Pour cela l'organe de commande 6 se base sur la température(t), l'irradiance solaire prévisionnelle maximale $W_{prév}(t)$ précédemment estimée et des caractéristiques de l'installation 1 et notamment du panneau solaire 3.

Les caractéristiques du panneau solaire 3 considérées au conditions NOCT sont les suivantes.

$P_{pv.noct}$ : Puissance en sortie du panneau solaire 3 au NOCT (en Watt / m$^2$ de panneau solaire)
$T_{pv.noct}$ : Température de référence au NOCT (en °C)
*Coef température PV* : Coefficient de température NOCT (en °C)

On détermine d'abord la puissance maximale disponible en sortie du panneau solaire 3 (sans correction liée à la température des cellules) en fonction de l'irradiance solaire prévisionnelle maximale:

$$P_{PVidéal}(t) = (W_{prév}(t))/800 * P_{pv.noct}$$

On calcule ensuite la température des cellules (en °C) en fonction de la température ambiante et de l'irradiance solaire prévisionnelle maximale:

$$T_{cell}(t) = Température(t) + (W_{prév}(t))/800*(T_{pv.noct}-20)$$

On détermine en conséquence les pertes de puissance liées à ladite température des cellules (lorsque la température des cellules est supérieure à une température nominale, l'efficacité d'un panneau solaire 3 diminue proportionnellement au Coefficient de Température Coef température PV) :

$$P_{pertePV}(t)= P_{PVideal}(t)*(|Coef\ température\ PV|)/100*(T_{cell}(t)-T_{pv.noct})$$

A partir de là, l'organe de commande 6 déduit la puissance électrique prévisionnelle maximale $P_{PV}$ (t) disponible en sortie du panneau solaire 3 :

$$P_{PV}(t) = P_{PVideal}(t) - P_{pertePV}(t)$$

La puissance électrique prévisionnelle maximale $P_{PV}$ (t) dépend donc bien de la température prévisionnelle température(t).

Optionnellement, mais de manière non obligatoire, l'organe de commande 6 peut en déduire l'énergie électrique prévisionnelle maximale $E_{ref}$ disponible en sortie du panneau solaire 3.

Ainsi l'énergie électrique prévisionnelle $E_{ref}$ produite (en W/h) entre l'horaire de lever du jour $H_{ref}$ et l'horaire $H_{ref}$ + n * h par le panneau solaire 3 est égale à :

$$E_{ref} = \int_{Href}^{Href+nh} P_{PV}(t).dt$$

avec n un entier et h un pas temporel choisi pour le calcul de la production solaire prévisionnelle lors de la première étape 101. h est par exemple égal à une heure.

La figure 5 donne un exemple d'évolution de la puissance électrique prévisionnelle maximale PPV (t) en fonction de l'heure locale ainsi que la valeur de l'énergie électrique prévisionnelle maximale Eref associée pour n = 6 et h = 1 heure (correspondant à la partie hachurée).

Une autre alternative au filtre de Kalman ou à la formule précitée pour le calcul de Pmpp_est pourrait également être l'utilisation d'un algorithme d'« apprentissage machine » (« machine learning » en anglais) et qui prendrait comme données d'entrées les mêmes que celles utilisées pour le filtre de Kalman dans la mise en œuvre qui a été décrite. Les stratégies de délestages pourront bien entendues être différentes de ce qui a été indiqué. D'autres sorties que celles d'importance haute pourront ainsi être conformées pour limiter leur consommation électrique.

Les possibilités de configuration de l'installation pourront être différentes. Par exemple, les formules de répartition au cours de la journée pourront être plus ou moins détaillées (par demi-heure ; par tronçon d'au moins deux heures ...) . L'organe de commande pourra ne s'appuyer que sur le niveau d'importance de la sortie et l'énergie électrique maximale potentiellement disponible E(t) pour calculer les crédits horaires de consommation. L'organe de commande pourra ne s'appuyer que sur le niveau d'importance de la sortie, l'état de charge des batteries et l'énergie électrique maximale potentiellement disponible E(t) pour calculer les crédits horaires de consommation.

Afin de fixer le crédit horaire de consommation électrique, l'organe de commande pourra également prendre en compte une estimation de l'énergie électrique qui sera consommée dans la journée considérée Ec(t). L'organe de commande 6 s'appuiera à cet effet sur une mise en mémoire d'au moins un profil de consommation au niveau des sorties et/ou sur un algorithme de prédiction de consommation au niveau des sorties (identique dans sa structure à l'algorithme de prédiction de l'énergie électrique maximale potentiellement disponible E(t) et par exemple basé sur des données sur les différents équipements branchés sur les sorties de l'installation). En ce qui concerne le profil de consommation celui-ci pourra être un profil de consommation indiqué directement par l'opérateur (par exemple à partir de données sur les différents équipements branchés sur les sorties de l'installation) ou bien un profil de consommation réel d'une des journées précédentes qui a été sauvegardé au vu et à mesure de la journée. Pour calculer l'irradiance solaire maximale théorique lors de la première phase de la première étape, on pourra s'appuyer sur l'algorithme suivant :

```
function [Heure_lever_jour, Heure_coucher_jour, G_Surface_Inclinee]
= fcn(time, Date_jour, Date_mois, Date_annee, Latitude, Longitude,
Fuseaux_horaire,Orienation_PV_Azimut,Orientation_PV_tilt, Albedo,
Altitude, Trouble_Linke)


%# Bibliographie : "Gisement solaire et transferts énergétiques"
%# Alain RICAUD (2011)
%# Document publier sur le site web http://www.cythelia.fr/


%# Calcul du jour de l'année référence 1er janvier
N1 = floor(Date_mois*275/9);
N2 = floor((Date_mois+9)/12);
K = 1 + floor((Date_annee-4*floor(Date_annee/4)+2)/3);
N = N1-N2*K+Date_jour-30;


%# Calcul de la déclinaison solaire en degrés
x = 2*pi/365 * (N-81);
delta = 23.45*sin(x);


%# Calcul de l'écart de temps pour le jour N (équation du temps)
Eot = 9.87*sin(2*x)-7.53*cos(x)-1.5*sin(x);


%# Calcul de l'angle horaire en fonction de l'heure
    %# Calcul de Local Standard Time Meridian
    LSTM = 15*Fuseaux_horaire;
    %# Calcul du facteur de correction du temps en minutes
    TC = 4*(Longitude-LSTM)+Eot;
```

```
    %# Calcul du Local Solar time en heure, en fonction de l'heure
time en heure
    LST = time+(TC/60);
    %# Calcul l'angle horaire AH (oméga) en degrés, en fonction de
l'heure time en heure
    Angle_horaire = (LST-12)*15;


%# Calcul de la hauteur angulaire en fonction de l'heure
sinh =
sind(Latitude)*sind(delta)+cosd(Latitude)*cosd(delta)*cosd(Angle_hor
aire);
%# Hauteur_angulaire en radian
Hauteur_angulaire = asin(sinh);
%# Hauteur_angulaire en degres
Hauteur_angulaire_d = Hauteur_angulaire *180/pi;


%# Calcul de l'azimut solaire en fonction de l'heure
tga = sind(Angle_horaire)/(sind(Latitude)*cosd(Angle_horaire)-
cosd(Latitude)*tand(delta));
%# Azimut_solaire en radian
Azimut_solaire = atan(tga);
%# Azimut_solaire en degres
Azimut_solaire_d = Azimut_solaire *180/pi;


    %# calcul annexe : lever et coucher du jour

    Cos_angle_horaire_lever = - tand(Latitude)*tand(delta);
    Angle_horaire_lever = acosd(Cos_angle_horaire_lever);
    LST_lever = 12 - Angle_horaire_lever / 15;
    Heure_lever_jour = LST_lever - (TC/60);

    LST_coucher = 12 + Angle_horaire_lever / 15;
    Heure_coucher_jour = LST_coucher - (TC/60);


%# Calcul du trouble de Linke
    %# TL = 3,2 ± 0,5 en régions tempérées (mini en hiver : 2,5 à 3,
maxi en été : 3,5 à 4).
    %# TL = 3,9 ± 0,4 en régions intertropicales humides (maxi en
saison sèche : 4,5 à 5)


TL = Trouble_Linke;

%# Calcul du rayonnement direct horizontal Ih
    %# constante solaire hors atmosphère
    I0 = 1360.8;
    %# Calcul de l'épaisseur d'atmosphère (simplifié, pression =
1013 mbar)

    m = 0.88^Altitude / sinh;
    if Hauteur_angulaire < 0
        m = 1000000;
    end


    %# Calcul de l'épaisseur optique de Rayleigh
```

```
    if m <= 20
    Rayleigh = (6.62960+1.75130*m-0.12020*m^2+0.00650*m^3-
0.00013*m^4)^(-1);
    else
    Rayleigh = (10.4+0.718*m)^(-1);
    end


    %# Calcul du rayonnement direct horizontal. Formule proposée par
l'ESRA (European Solar Radiation Atlas) (2000)
    I1 = I0*exp(-0.8662*TL*m*Rayleigh);
    Ih = I1*sin(Hauteur_angulaire);
    if Ih < 0
        Ih = 0;
        I1 = 0;
    end


    %# Calcul du rayonnement diffus
    Trd = -1.5843*10^(-2) + 3.0543*10^(-2)*TL + 3.797*10^(-4)*TL^2;

    A0 = 2.6463*10^(-1) - 6.1581*10^(-2)*TL + 3.1408*10^(-3)*TL^2;
    if (A0*Trd) < 2*10^(-3)
        A0 = 2*10^(-3);
    end


    A1 = 2.0402 + 1.8945*10^(-2)*TL - 1.1161*10^(-3)*TL^2;
    A2 = -1.3025 + 3.9231*10^(-2)*TL + 8.5079*10^(-3)*TL^2;

    Fd = A0 + A1*sin(Hauteur_angulaire) +
A2*(sin(Hauteur_angulaire))^2;

    Dh = I0 * Trd * Fd;

    if Dh < 0
    Dh = 0;
    end


    %# Calcul du rayonnement global horizontal
Gh = Ih + Dh;


    %# Calcul sur une surface quelconque
    %# Angle Orientation_PV_tilt en degrés est l'angle du plan de
l'objet étudié par rapport à l'horizontale
    %# Angle Orienation_PV_Azimut en degrés est l'angle entre la normale
au plan de l'objet étudié et le plan méridien du lieu :
    %# Hémisphère nord : l'angle est définit à partir du sud
géographique (0°), puis négatif vers l'est (anti trigonométrique)
    %# Hémisphère sud : l'angle est définit à partir du nord
géographique (0°), puis négatif vers l'est (trigonométrique)


    %# Calcul du rayonnement direct sur le plan incliné

    I_Surface_Inclinee = I1 *
(sin(Hauteur_angulaire)*cosd(Orientation_PV_tilt) +
```

```
cos(Hauteur_angulaire)*cosd(Orienation_PV_Azimut-
Azimut_solaire_d)*sind(Orientation_PV_tilt));
        if I_Surface_Inclinee < 0
            I_Surface_Inclinee = 0;
        end

        %# Calcul du rayonnement diffus avec prise en compte du réfléchi
(coef d'Albédo)

            %# type de surface -->  Albédo de Bond (0 à 1)
                %# Surface de lac -->   0.02 à 0.04
                %# Forêt de conifères1 -->   0.05 à 0.15
                %# Forêt de feuillus1 -->    0.15 à 0.20
                %# Surface de la mer -->    0.05 à 0.15
                %# Sol sombre -->   0.05 à 0.15
                %# Cultures --> 0.15 à 0.25
                %# Sable léger et sec -->   0.25 à 0.45
                %# Calcaire2 -->    environ 0.40
                %# Nuage -->    0.5 à 0.8
                %# Glace -->    environ 0.60
                %# Neige tassée --> 0.40 à 0.70
                %# Neige fraîche -->    0.75 à 0.90
                %# Miroir parfait -->   1

                %# Par défaut, le coef d'albedo sera de 0.2

        D_Surface_Inclinee = Dh + (1-
cosd(Orientation_PV_tilt))*Albedo*Gh/2;
        if D_Surface_Inclinee < 0
            D_Surface_Inclinee = 0;
        end

        %# Calcul de l'éclairement globale (W.m-2)
        G_Surface_Inclinee = I_Surface_Inclinee + D_Surface_Inclinee;

    end
```

**Revendications**

1. Procédé de délestage contrôlé de sorties d'au moins une installation (1) de production d'énergie électrique comprenant au moins une source d'énergie renouvelable et au moins une batterie (5), les sorties étant classées selon au moins deux niveaux d'importance distincts, le procédé comprenant les étapes pour une journée donnée de :

   - A partir de prévisions météorologiques, prédire une énergie électrique maximale potentiellement disponible en sortie de la source d'énergie renouvelable,
   - Déduire au moins à partir de la prédiction de l'énergie électrique maximale potentiellement disponible en sortie de la source d'énergie renouvelable, un crédit horaire de consommation électrique pour chaque niveau d'importance de sortie,
   - Délester les sorties d'un niveau d'importance donné lorsque le crédit horaire de consommation électrique qui était attribué à ce niveau a été atteint tout en délestant en priorité les sorties d'un niveau d'importance moindre.

2. Procédé selon la revendication 1, dans lequel on classe les sorties (12, 13, 14) selon trois niveaux d'importance distincts : un niveau d'importance haute, un niveau d'importance intermédiaire et un niveau d'importance basse.

3. Procédé selon l'une des revendications précédentes, dans laquelle on associe au moins l'une des sorties (12, 13, 14) à une connectique limitant la consommation électrique.

**4.** Procédé selon la revendication 3, dans lequel la sortie est celle d'importance la plus haute dans l'installation.

**5.** Procédé selon l'une des revendications précédentes, dans lequel l'installation (1) peut fonctionner dans un mode dégradé dans lequel le crédit horaire de consommation électrique est imposé.

**6.** Procédé selon l'une des revendications précédentes, dans lequel on déduit le crédit horaire de consommation électrique pour chaque niveau d'importance de sortie en fonction également de l'état de charge de la batterie (5).

**7.** Procédé selon la revendication 6, dans lequel on fixe un seuil minimal d'état de charge des batteries (SoC min), un seuil critique d'état de charge des batteries (SoC critique) et un seuil de ré-enclenchement possible au vu de l'état de charge des batteries (SoC ré-enclenchement) de sorte que

    - si le seuil SoC min est atteint toutes les sorties (12, 13, 14) sont délestées ;
    - si le seuil SoC critique est atteint toute l'installation (1) s'éteint.

**8.** Procédé selon la revendication 7, dans lequel les sorties (12, 13, 14) ne sont réactivées que si le seuil SoC ré-enclenchement est dépassé.

**9.** Procédé selon l'une des revendications précédentes, dans lequel on estime une consommation électrique au niveau des sorties (12, 13, 14) pour la journée et on s'appuie également sur cette estimation pour déduire le crédit horaire de consommation électrique pour chaque niveau d'importance de sortie.

**10.** Procédé selon la revendication 9, dans lequel pour estimer une consommation électrique au niveau des sorties (12, 13, 14) pour la journée on s'appuie sur au moins un enregistrement d'un profil de consommation électrique au niveau desdites sorties.

**11.** Procédé selon l'une des revendications précédentes, dans lequel un crédit horaire de consommation électrique non consommé entièrement sur un créneau horaire n'est pas reporté sur le prochain créneau horaire.

**12.** Procédé selon l'une des revendications précédentes, comportant l'étape de comparer au cours de la journée l'écart entre la prévision de l'énergie électrique maximale potentiellement disponible et une énergie électrique réellement produite et de recalculer en fonction les crédits horaires de consommation électrique suivants si la comparaison dépasse un seuil prédéterminé.

**13.** Procédé selon l'une des revendications précédentes, dans lequel pour prédire l'énergie électrique maximale potentiellement disponible en sortie de la source d'énergie renouvelable, le procédé se base sur des données de nébulosité, de température et d'indice UV.

**14.** Procédé selon l'une des revendications précédentes, comportant les étapes de :

    - mesurer une production électrique maximale réellement disponible au niveau de la source d'énergie renouvelable ;
    - estimer une production électrique maximale prévisionnelle à partir notamment des prévisions météorologiques ;
    - comparer ladite production électrique maximale prévisionnelle à ladite production électrique maximale réellement disponible pour prédire l'énergie électrique maximale potentiellement disponible en sortie de la source d'énergie renouvelable.

**15.** Procédé selon la revendication 14, dans lequel l'étape de comparer est mise en oeuvre par l'intermédiaire d'un filtre de KALMAN.

**16.** Procédé selon la revendication 14 ou la revendication 15, dans lequel on estime une irradiance solaire maximale prévisionnelle à partir notamment des prévisions météorologiques, pour déterminer la production électrique maximale prévisionnelle.

**17.** Procédé selon l'une des revendications précédentes, dans lequel l'installation est une installation de production photovoltaïque.

**18.** Organe de commande adapté pour mettre en oeuvre un délestage contrôlé, de sorties d'au moins une installation (1) de production d'énergie électrique comprenant au moins une source d'énergie renouvelable et au moins une batterie (5), les sorties étant classées selon au moins deux niveaux d'importance distincts, pour une journée donnée, ledit organe de commande comprenant :

- des moyens adaptés à prédire, à partir de prévisions météorologiques, une énergie électrique maximale potentiellement disponible en sortie de la source d'énergie renouvelable,
- des moyens adaptés à déduire, au moins à partir de la prédiction de l'énergie électrique maximale potentiellement disponible en sortie de la source d'énergie renouvelable, un crédit horaire de consommation électrique pour chaque niveau d'importance de sortie,
- des moyens adaptés à mettre en oeuvre le délestage des sorties d'un niveau d'importance donné lorsque le crédit horaire de consommation électrique qui était attribué à ce niveau a été atteint tout en délestant en priorité les sorties d'un niveau d'importance moindre.

**19.** Programme d'ordinateur comprenant des instructions qui conduisent l'organe de commande selon la revendication 18 à exécuter les étapes du procédé selon la revendication 1.

**20.** Moyens de stockage stockant un programme d'ordinateur comprenant des instructions pour mettre en oeuvre, par un organe de commande, le procédé selon l'une des revendications 1 à 17.

**Patentansprüche**

**1.** Verfahren zum gesteuerten Abschalten von Ausgängen mindestens einer Anlage (1) zur Erzeugung elektrischer Energie, die mindestens eine erneuerbare Energiequelle und mindestens eine Batterie (5) umfasst, wobei die Ausgänge nach mindestens zwei unterschiedlichen Wichtigkeitsstufen klassifiziert sind, wobei das Verfahren für einen gegebenen Tag die Schritte umfasst:

- Vorhersagen einer am Ausgang der erneuerbaren Energiequelle potentiell verfügbaren maximalen elektrischen Energie anhand von meteorologischen Vorhersagen,
- Herleiten eines Stundenguthabens für einen Stromverbrauch für jede Ausgangswichtigkeitsstufe zumindest anhand der Vorhersage der am Ausgang der erneuerbaren Energiequelle potentiell verfügbaren maximalen elektrischen Energie,
- Abschalten der Ausgänge einer gegebenen Wichtigkeitsstufe, wenn das Stundenguthaben für einen Stromverbrauch, das dieser Stufe zugeordnet wurde, erreicht worden ist, während vorrangig die Ausgänge mit einer niedrigeren Wichtigkeitsstufe abgeschaltet werden.

**2.** Verfahren nach Anspruch 1, bei dem man die Ausgänge (12, 13, 14) nach drei unterschiedlichen Wichtigkeitsstufen klassifiziert: eine hohe Wichtigkeitsstufe, eine mittlere Wichtigkeitsstufe und eine niedrige Wichtigkeitsstufe.

**3.** Verfahren nach einem der vorhergehenden Ansprüche, bei dem man mindestens einen der Ausgänge (12, 13, 14) mit einer Anschlusstechnik verbindet, die den Stromverbrauch begrenzt.

**4.** Verfahren nach Anspruch 3, bei dem der Ausgang derjenige mit der höchsten Wichtigkeit in der Anlage ist.

**5.** Verfahren nach einem der vorhergehenden Ansprüche, bei dem die Anlage (1) in einem herabgesetzten Modus arbeiten kann, in dem das Stundenguthaben für einen Stromverbrauch vorgeschrieben ist.

**6.** Verfahren nach einem der vorhergehenden Ansprüche, bei dem man das Stundenguthaben für einen Stromverbrauch für jede Ausgangswichtigkeitsstufe ebenso in Abhängigkeit von dem Ladezustand der Batterie (5) herleitet.

**7.** Verfahren nach Anspruch 6, bei dem man einen minimalen Batterieladezustandsschwellenwert (SoC min), einen kritischen Batterieladezustandsschwellenwert (SoC kritisch) und einen Schwellenwert für eine mögliche Wiedereinschaltung im Hinblick auf den Batterieladezustand (SoC Wiedereinschaltung) derart festlegt, dass

- wenn der Schwellenwert SoC min erreicht wird, alle Ausgänge (12, 13, 14) abgeschaltet werden;
- wenn der Schwellenwert SoC kritisch erreicht wird, die gesamte Anlage (1) ausgeschaltet wird.

**8.** Verfahren nach Anspruch 7, bei dem die Ausgänge (12 13, 14) nur reaktiviert werden, wenn der Schwellenwert SoC Wiedereinschaltung überschritten wird.

9. Verfahren nach einem der vorhergehenden Ansprüche, bei dem man einen Stromverbrauch im Bereich der Ausgänge (12, 13, 14) für den Tag schätzt und man sich ebenso auf diese Schätzung stützt, um das Stundenguthaben für einen Stromverbrauch für jede Ausgangswichtigkeitsstufe herzuleiten.

10. Verfahren nach Anspruch 9, bei dem man sich zum Schätzen eines Stromverbrauchs im Bereich der Ausgänge (12, 13, 14) für den Tag auf mindestens eine Aufzeichnung eines Stromverbrauchsprofils im Bereich der genannten Ausgänge stützt.

11. Verfahren nach einem der vorhergehenden Ansprüche, bei dem ein Stundenguthaben für einen Stromverbrauch, das in einem Zeitfenster nicht vollständig verbraucht wird, nicht auf das nächste Zeitfenster übertragen wird.

12. Verfahren nach einem der vorhergehenden Ansprüche, umfassend den Schritt des Vergleichens über den Tag der Differenz zwischen der Vorhersage der potentiell verfügbaren maximalen elektrischen Energie und einer tatsächlich erzeugten elektrischen Energie und des erneuten Berechnens in Abhängigkeit der nachfolgenden Stundenguthaben für einen Stromverbrauch, ob der Vergleich einen vorbestimmten Schwellenwert überschreitet.

13. Verfahren nach einem der vorhergehenden Ansprüche, bei dem sich das Verfahren zwecks Vorhersagen der am Ausgang der erneuerbaren Energiequelle potentiell verfügbaren maximalen elektrischen Energie auf Bewölkungs-, Temperatur- und UV-Index-Daten stützt.

14. Verfahren nach einem der vorhergehenden Ansprüche, umfassend die Schritte:

   - Messen einer im Bereich der erneuerbaren Energiequelle tatsächlich verfügbaren maximalen Stromerzeugung;
   - Schätzen einer voraussichtlichen maximalen Stromerzeugung insbesondere anhand von meteorologischen Vorhersagen;
   - Vergleichen der genannten voraussichtlichen maximalen Stromerzeugung mit der genannten tatsächlich verfügbaren maximalen Stromerzeugung, um die am Ausgang der erneuerbaren Energiequelle potentiell verfügbare maximale elektrische Energie vorherzusagen.

15. Verfahren nach Anspruch 14, bei dem der Schritt des Vergleichens mittels eines KALMAN-Filters durchgeführt wird.

16. Verfahren nach Anspruch 14 oder Anspruch 15, bei dem man eine voraussichtliche maximale Sonnenstrahlung insbesondere anhand von meteorologischen Vorhersagen schätzt, um die voraussichtliche maximale Stromerzeugung zu bestimmen.

17. Verfahren nach einem der vorhergehenden Ansprüche, bei dem die Anlage eine Photovoltaikanlage ist.

18. Steuerorgan, das geeignet ist, ein gesteuertes Abschalten von Ausgängen mindestens einer Anlage (1) zur Erzeugung elektrischer Energie durchzuführen, die mindestens eine erneuerbare Energiequelle und mindestens eine Batterie (5) umfasst, wobei die Ausgänge nach mindestens zwei unterschiedlichen Wichtigkeitsstufen klassifiziert sind, für einen gegebenen Tag, wobei das genannte Steuerorgan umfasst:

   - Mittel, die geeignet sind, anhand von meteorologischen Vorhersagen eine am Ausgang der erneuerbaren Energiequelle potentiell verfügbare maximale elektrische Energie vorherzusagen,
   - Mittel, die geeignet sind, zumindest anhand der Vorhersage der am Ausgang der erneuerbaren Energiequelle potentiell verfügbaren maximalen elektrischen Energie ein Stundenguthaben für einen Stromverbrauch für jede Ausgangswichtigkeitsstufe herzuleiten,
   - Mittel, die geeignet sind, das Abschalten der Ausgänge einer gegebenen Wichtigkeitsstufe durchzuführen, wenn das Stundenguthaben des Stromverbrauchs, das dieser Stufe zugeordnet wurde, erreicht worden ist, während vorrangig die Ausgänge mit einer niedrigeren Wichtigkeitsstufe abgeschaltet werden.

19. Computerprogramm, das Anweisungen umfasst, die das Steuerorgan nach Anspruch 18 veranlassen, die Schritte des Verfahrens nach Anspruch 1 auszuführen.

20. Speichermittel, die ein Computerprogramm speichern, das Anweisungen zum Durchführen des Verfahrens nach einem der Ansprüche 1 bis 17 mittels eines Steuerorgans umfasst.

## Claims

1. A method of shedding load in controlled manner from the outputs of at least one installation (1) for producing electrical energy having at least one source of renewable energy and at least one battery (5), the outputs being classified in at least two distinct levels of importance, the method comprising the following steps for any given day:

   · on the basis of weather forecasts, predicting the maximum amount of electrical energy that is potentially available as output from the renewable energy source;
   · on the basis of at least the maximum predicted amount of electrical energy that is potentially available as output from the renewable energy source, deducing an hourly electricity consumption credit for each output level of importance;
   · subjecting the outputs of a given level of importance to load-shedding when the hourly electricity consumption credit that was allocated to that level has been reached, while giving priority to shedding load from the outputs of lower level of importance.

2. A method according to claim 1, wherein the outputs (12, 13, 14) are classified in three distinct levels of importance: a high level of importance, an intermediate level of importance, and a low level of importance.

3. A method according to either preceding claim, wherein at least one of the outputs (12, 13, 14) is associated with outlet connections that limit its electricity consumption.

4. A method according to claim 3, wherein the output is the output of highest importance in the installation.

5. A method according to any preceding claim, wherein the installation (1) can operate in a degraded mode in which the hourly electricity consumption credit is imposed.

6. A method according to any preceding claim, wherein the hourly electricity consumption credit for each output level of importance is also deduced as a function of the state of charge of the battery (5).

7. A method according to claim 6, wherein a minimum state of charge threshold for the batteries (SoC min), a critical state of charge threshold for the batteries (SoC critical), and a threshold where re-connection is possible given the state of charge of the batteries (SoC re-connection) are set in such a manner that:

   · if the threshold SoC min is reached, all of the outputs (12, 13, 14) are subjected to load-shedding;
   · if the threshold SoC critical is reached, the entire installation (1) is switched off.

8. A method according to claim 7, wherein the outputs (12, 13, 14) are reactivated only if the threshold SoC re-connection is exceeded.

9. A method according to any preceding claim, wherein electricity consumption for each output (12, 13, 14) is estimated for the day, and use is also made of this estimated consumption to deduce the hourly electricity consumption credit for each output level of importance.

10. A method according to claim 9, wherein in order to estimate electricity consumption for each output (12, 13, 14) for the day, use is made of at least one stored profile of electricity consumption by said outputs.

11. A method according to any preceding claim, wherein an hourly electricity consumption credit that is not consumed in full in any one timeslot is not carried forward to the next timeslot.

12. A method according to any preceding claim, including the steps, performed during the day, of comparing the difference between the maximum predicted amount of electrical energy that is potentially available and the amount of electrical energy that is actually produced, and of recalculating accordingly the subsequent hourly electricity consumption credits if the comparison exceeds a predetermined threshold.

13. A method according to any preceding claim, wherein in order to predict the maximum amount of electrical energy that is potentially available as output from the renewable energy source, the method relies on data concerning cloudiness, temperature, and UV index.

**14.** A method according to any preceding claim, including the steps of:

· measuring the maximum electricity production that is actually available from the renewable energy source;
· estimating a maximum forecast electricity production, in particular from weather forecasts;
· comparing said maximum forecast electricity production with said maximum electricity production that is actually available in order to forecast the maximum amount of electrical energy that is potentially available as output from the renewable energy source.

**15.** A method according to claim 14, wherein the comparison step is performed by means of a Kalman filter.

**16.** A method according to claim 14 or claim 15, wherein a maximum forecast solar irradiance is estimated in particular from weather forecasts, in order to determine the maximum forecast electricity production.

**17.** A method according to any preceding claim, wherein the installation is a photovoltaic production installation.

**18.** A control member adapted to perform shedding load in controlled manner from the outputs of at least one installation (1) for producing electrical energy having at least one source of renewable energy and at least one battery (5), the outputs being classified in at least two distinct levels of importance, for any given day, the control member comprising:

· means configured to predict, on the basis of weather forecasts, the maximum amount of electrical energy that is potentially available as output from the renewable energy source;
· means configured to deduced, on the basis of at least the maximum predicted amount of electrical energy that is potentially available as output from the renewable energy source, an hourly electricity consumption credit for each output level of importance;
· means configured to subject the outputs of a given level of importance to load-shedding when the hourly electricity consumption credit that was allocated to that level has been reached, while giving priority to shedding load from the outputs of lower level of importance.

**19.** A computer program including instructions for enabling the control member according to claim 18 to perform the steps of the method according to claim 1.

**20.** Storage means storing a computer program including instructions for enabling the control member to perform the method according to any one of claims 1 to 17.

Fig. 1

Fig. 2

Fig. 3

Fig. 4

Fig. 5

Ppv(t)

heure

Fig. 6

Fig. 7

105

E(t) →

SoC →

Configuration visée →

Niveaux de priorité des sorties →

$E_{site}(t_i)$ →

→ Ordre(s) de délestage